# FASCICULE DE BREVET EUROPEEN

(11) **EP 3 075 687 B1**
(45) Date de publication et mention de la délivrance du brevet: **21.03.2018**
(21) Numéro de dépôt: 16162821.9
(22) Date de dépôt: 30.03.2016
(51) Int. Cl.: B65G 69/00

(54) **DISPOSITIF D'IMMOBILISATION DE VEHICULE ET SYSTEME LE COMPRENANT**
VORRICHTUNG ZUR IMMOBILISIERUNG EINES FAHRZEUGS, UND DIESE VORRICHTUNG UMFASSENDES SYSTEM
VEHICLE IMMOBILISATION DEVICE AND SYSTEM INCLUDING SAME

(30) Priorité: 30.03.2015 FR 1552697
(43) Date de publication de la demande: 05.10.2016
(73) Titulaire: GPsystems, 82790 Saint-Sornin-Leulac (FR)
(72) Inventeur: Verge, Jean-Paul, 87290 Saint-Sornin-Leulac (FR); Macquet, Pierre, 87290 Saint-Sornin-Leulac (FR)
(74) Mandataire: Cabinet Chaillot

(56) Documents cités:
- EP-A1- 0 047 222
- EP-A1- 0 357 087
- EP-A1- 0 384 850
- EP-A1- 0 811 526
- EP-A1- 0 960 844
- FR-A1- 2 841 546

## Description

La présente invention porte sur un dispositif d'immobilisation de véhicules, notamment de camions devant un quai de chargement, et un système d'immobilisation comprenant de tels dispositifs.

On connaît des demandes de brevets français FR2779137 et FR2841546 une cale autonome et automatique d'immobilisation de véhicules utilisée dans un système d'immobilisation selon le préambule de la revendication 1.

Cette cale comprend un bâti, un corps de cale articulé de façon pivotante par rapport au bâti entre une première position escamotée et une seconde position en saillie/déployée, et des moyens de verrouillage du corps de cale entre les première et seconde positions, prévus pour coopérer avec le bâti.

En utilisation, deux séries de telles cales, alignées les unes à la suite des autres, sont installées perpendiculairement à un quai de chargement, le long de chaque côté d'un emplacement de chargement/déchargement. Par ailleurs, chaque cale d'une telle série se trouve dans la même position, selon l'axe longitudinal dudit emplacement, qu'une autre cale de l'autre série. En d'autres termes, les séries de cales sont disposées de manière symétrique par rapport au plan vertical perpendiculaire au quai de chargement et passant par le centre de l'emplacement de chargement/déchargement.

En l'absence de véhicule, les cales sont dans leur position escamotée. Lorsqu'un véhicule recule en direction du quai, les cales demeurent escamotées. Une fois à l'arrêt, on commande le déploiement des cales, de sorte que les cales qui ne sont pas sous les roues passent à leur position en saillie.

En théorie, une cale est censée être déployée à proximité immédiate de chaque roue du véhicule, de façon à interdire tout déplacement involontaire de celui-ci.

Cependant, la distance entre les roues et l'arrière du véhicule, qui vient en butée contre un butoir du quai de chargement/déchargement, n'est pas la même pour tous les véhicules et les diamètres des roues varient également en fonction des véhicules.

Par conséquent, le demandeur s'est aperçu qu'en pratique, dans certains cas, les cales ne viennent pas correctement au contact des roues. Par exemple, un espace est présent entre les cales et les roues. Le véhicule est ainsi libre de se déplacer de manière involontaire, par exemple par suite du chargement ou du déchargement, ce qui pose de graves problèmes de sécurité des manutentionnaires, en particulier un risque de chute entre l'arrière du véhicule et le quai. Comme autre exemple, la sortie complète d'une cale peut être empêchée par la roue, auquel cas la cale ne peut pas assurer correctement sa fonction d'arrêt et, dans certains cas extrêmes, la structure de la cale peut être endommagée du fait que la roue ne vient pas en appui contre laquelle de la manière prévue lors de la conception de la cale.

Il existe donc un problème de fiabilité d'immobilisation du véhicule et de préservation de l'intégrité des cales.

Le demandeur se propose de résoudre ce problème par la disposition des séries de cales de telle sorte qu'un décalage est créé entre les cales d'une série et les cales d'une autre série. De cette manière, la distance théorique maximale entre la cale et la roue est réduite, permettant d'augmenter la fiabilité d'immobilisation du véhicule et de réduire le risque qu'une cale ne se place pas correctement contre la roue.

La présente invention a donc pour objet un dispositif d'immobilisation d'un véhicule dans un emplacement de chargement/déchargement, destiné à être installé dans le sol et comprenant une série de cales d'immobilisation escamotables alignées le long d'un axe dit longitudinal et chacune mobile entre une position escamotée dans le sol, permettant le passage des roues d'un véhicule, et une position déployée, dans laquelle la cale fait saillie par rapport au sol pour former un arrêt contre lequel vient buter une roue d'un véhicule, caractérisé par le fait qu'il comprend au moins une autre série de cales d'immobilisation escamotables alignées le long d'un axe parallèle audit axe longitudinal, chacune desdites séries de cales étant disposée adjacente le long d'une autre série de cales pour que les cales forment, dans la position déployée, un arrêt pour les roues d'un même côté du véhicule, chaque cale d'une série étant décalée des cales de la ou des autres séries, dans la direction dudit axe longitudinal.

La largeur des cales peut être comprise entre 10 cm et 40 cm, et peut notamment être, de préférence, de 18 cm.

On entend ici par « largeur » la dimension des cales dans la direction horizontale perpendiculaire audit axe longitudinal.

Selon des caractéristiques particulières de l'invention, l'espacement entre deux cales immédiatement consécutives d'une même série de cales est constant sur toute ladite série et constitue le pas de ladite série, toutes les séries de cales ont un même pas et, pour une quelconque cale d'une série, le décalage entre, d'une part, cette cale et, d'autre part, la cale la plus proche, dans la ou chacune des séries immédiatement à côté de ladite série précitée, est égal audit pas divisé par le nombre de séries de cales.

Le dispositif d'immobilisation peut ainsi comprendre deux séries de cales, ledit décalage étant alors égal à la moitié du pas des séries.

Le dispositif d'immobilisation pourrait aussi comprendre trois, quatre, etc., séries de cales, auquel cas ledit décalage sera alors égal au tiers, au quart, etc., dudit pas.

Le pas peut compris entre 5 cm et 40 cm, et peut notamment être, de préférence, de 20 cm. Selon un autre mode de réalisation préféré, le pas peut notamment être de 10 cm.

Selon un premier mode de réalisation particulier, chaque cale est une cale autonome comprenant un corps de cale et un bâti dans lequel le corps de cale est monté mobile, le bâti comprenant, de préférence, deux plaques latérales verticales parallèles entre elles et reliées par des entretoises, le corps de cale étant monté entre lesdites deux plaques latérales.

Chaque série de telles cales pourra être placée dans une fosse respective, ou alors les séries de cales pourront toutes être placées dans une même fosse, dont les dimensions pourront être celles des fosses existantes.

Selon un second mode de réalisation particulier, chaque cale d'une série de cales est montée mobile dans un bâti dans lequel est également montée la cale, de la ou de chaque autre série de cales, la plus proche de ladite cale précitée, lesdites cales partageant ainsi le même bâti.

Les séries de telles cales sont destinées à être placées dans une même fosse.

L'utilisation d'un même bâti pour plusieurs cales permet de simplifier et de raccourcir le temps d'installation du dispositif d'immobilisation.

Dans le cas d'un dispositif d'immobilisation comprenant deux séries de cales à pas constant et à décalage égal à la moitié dudit pas, chaque bâti peut comprendre deux plaques latérales de même longueur, égale au pas des deux séries de cales, et une plaque centrale de longueur égale à 1,5 fois la longueur des plaques latérales, les plaques latérales et centrale étant verticales et parallèles, chaque plaque latérale étant reliée à la plaque centrale par au moins une entretoise, une première plaque latérale étant en regard d'une face de la plaque centrale et disposée de telle sorte qu'un bord vertical de ladite plaque latérale et un bord vertical de ladite plaque centrale appartiennent à un même plan théorique vertical perpendiculaire audit axe longitudinal, et la seconde plaque latérale étant en regard de la face opposée de la plaque centrale et disposée de telle sorte qu'un bord vertical de ladite seconde plaque latérale et l'autre bord vertical de ladite plaque centrale appartiennent également à un même plan théorique vertical perpendiculaire audit axe longitudinal.

Cet agencement peut être généralisé à un plus grand nombre de séries : le nombre N de plaques centrales est égal à N_{série} - 1, N_{série} étant le nombre de séries de cales du dispositif d'immobilisation, le corps de cale de chaque série de cales le plus à l'extérieur est monté entre une plaque latérale et une plaque centrale, tandis que le corps de cale de la ou des autres séries de cales est monté entre deux plaques centrales, les plaques centrales étant toutes d'une même longueur L égale à L' + 1/N_{série}, L' étant la longueur des plaques latérales.

De préférence, le corps de cale est articulé de façon pivotante par rapport au bâti et la cale comprend des moyens de manoeuvre et de verrouillage du corps de cale entre la position escamotée et la position déployée, ces moyens de manoeuvre et de verrouillage comprenant un volet de verrouillage basculant entre deux positions l'une de verrouillage en butée sur une partie du bâti, et l'autre escamotée, qui correspondent respectivement aux positions déployée et escamotée de la cale, ainsi qu'un vérin double effet, interposé entre ce volet et le bâti.

La présente invention a également pour objet un système d'immobilisation d'un véhicule dans un emplacement de chargement/déchargement, caractérisé par le fait qu'il comprend deux dispositifs d'immobilisation tels que définis ci-dessus, installés dans l'emplacement de chargement/déchargement, chacun le long d'un côté dudit emplacement, le système d'immobilisation comprenant en outre au moins une fosse pour chaque dispositif d'immobilisation, de préférence une seule fosse par dispositif d'immobilisation.

Dans le cas où les dispositifs d'immobilisation sont tels que définis au second mode de réalisation décrit ci-dessus, le système d'immobilisation peut comprendre deux fosses, chaque dispositif d'immobilisation étant installé dans une fosse respective.

Le fait de prévoir l'installation du dispositif d'immobilisation selon l'invention dans une seule fosse présente l'avantage de réduire les coûts et le temps associés aux travaux de terrassement. Par ailleurs, avec les largeurs de cale mentionnées ci-dessus, il est possible d'installer le dispositif d'immobilisation selon la présente invention dans une fosse existante.

Pour mieux illustrer l'objet de la présente invention, on va en décrire ci-après un mode de réalisation particulier avec référence aux dessins annexés.

Sur ces dessins :
- la Figure 1 est une vue en perspective de face d'une paire de cales d'un dispositif d'immobilisation selon un mode de réalisation particulier de la présente invention ;
- la Figure 2 est une vue coupe longitudinale de la paire de cales de la Figure 1 ;
- la Figure 3 est une vue en perspective, côté arrière, du volet d'une cale de la Figure 1 ;
- la Figure 4 est une vue en perspective éclatée, côté avant, d'une cale de la Figure 1 ;
- la Figure 5 est une vue en perspective d'une paire de cales selon une variante du mode de réalisation de la Figure 1 ; et
- les Figures 6A à 6D sont des vues schématiques du fonctionnement de la paire de cales.

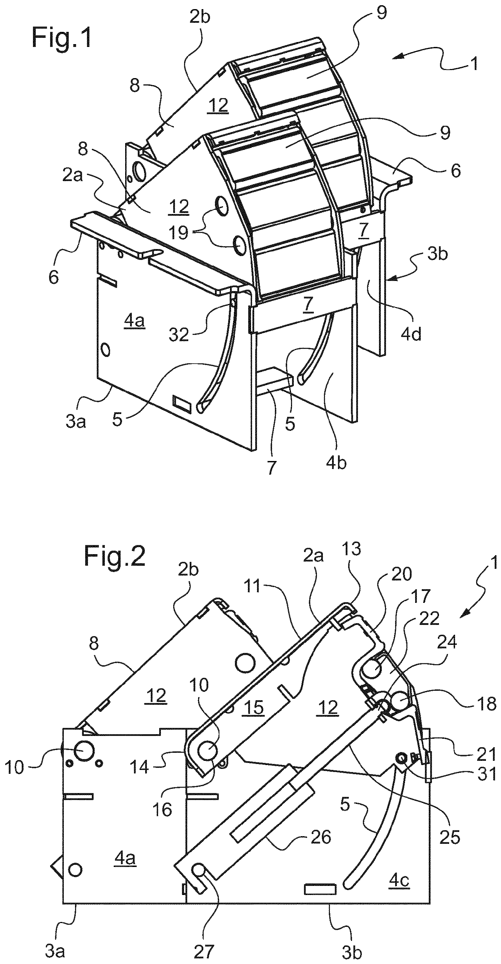

Si l'on se réfère à la Figure 1, on peut voir que l'on a représenté une paire de cales 2a,2b du dispositif d'immobilisation 1 selon le mode de réalisation particulier de la présente invention.

Le dispositif d'immobilisation 1 est formé par plusieurs de ces paires, mises les unes à la suite des autres.

La structure et le fonctionnement de chaque cale 2a,2b sont analogues à ceux décrits dans le brevet français FR 2779137 B1.

Dans ce qui suit, la direction longitudinale, ou axe longitudinal, correspond à la direction suivant laquelle les cales 2a,2b sont alignées les unes à la suite des autres, et qui correspond à la direction perpendiculaire au quai de chargement. Les côtés avant et arrière sont définis par rapport à cette direction longitudinale et correspondent, respectivement, au côté le plus proche du quai de chargement, et au côté opposé.

Chaque cale 2a,2b comprend un bâti 3a,3b et un corps de cale 8.

Chaque bâti 3a,3b comprend deux plaques latérales rectangulaires 4a,4b ; 4c,4d, de même longueur et hauteur et dont les bords verticaux, côté avant et côté arrière des cales 2a,2b, appartiennent à un même plan perpendiculaire aux faces verticales des plaques latérales 4a,4b ; 4c,4d.

Les bâtis 3a,3b sont juxtaposés l'un à l'autre, à la même hauteur mais décalés l'un par rapport à l'autre dans la direction longitudinale, à mi-longueur. En d'autres termes, les plaques latérales 4b et 4c, côté intérieur de la paire de cales 2a,2b, sont appliquées l'une contre l'autre et le bord vertical côté avant de la plaque latérale 4c du bâti 3b est à mi-longueur de la plaque latérale 4b du bâti 3a.

Les plaques latérales 4a,4b ; 4c,4d comprennent chacune, dans la région d'extrémité côté avant, une rainure traversante 5 en forme d'arc de cercle et dont le rôle sera explicité ci-après. Les plaques latérales 4a et 4d, non contigües, comprennent en partie supérieure une oreille 6 facilitant la manipulation et l'installation des cales 2a,2b dans une fosse.

Enfin, chaque bâti 3a,3b comprend également des entretoises 7 reliant les plaques latérales 4a,4b ; 4c,4d et assurant la rigidité de l'ensemble et la reprise des efforts.

Chaque cale 2a,2b comprend également un corps de cale 8 et des moyens de manoeuvre et de verrouillage 9 analogues à ceux décrits dans le brevet français FR 2779137. Ainsi, le corps de cale 8 est monté pivotant par rapport au bâti 3a,3b, autour d'un axe 10 de pivotement horizontal et perpendiculaire aux plaques latérales 4a,4b ; 4c,4d, comme on peut mieux le voir sur la Figure 2.

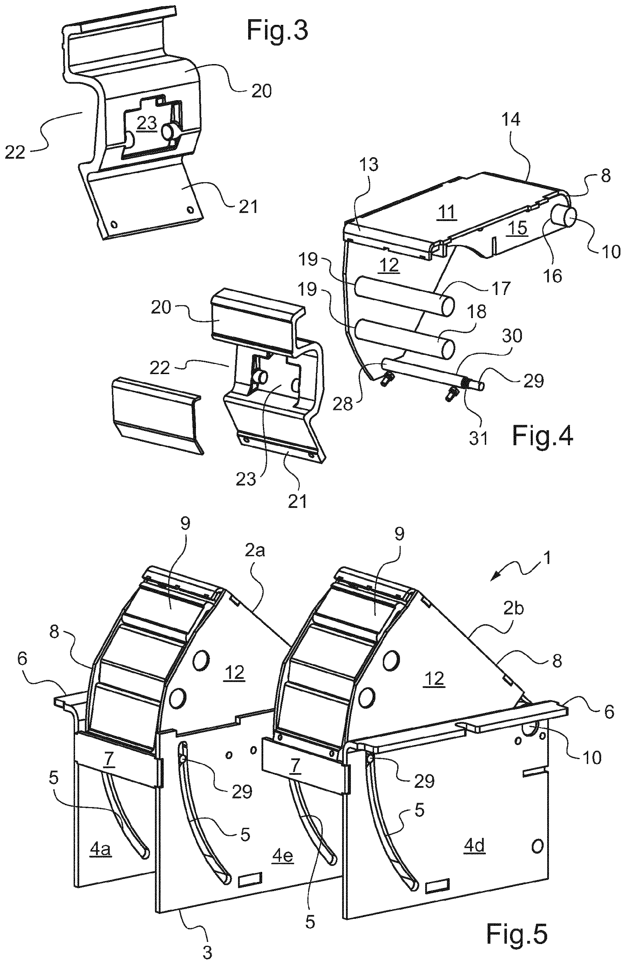

Si l'on se réfère à la Figure 4, on peut voir qu'un corps de cale 8 comprend une platine 11 et, perpendiculairement à cette dernière, deux ailes latérales 12, dont une seule est illustrée sur la Figure 4 afin de révéler la structure interne du corps de cale 8. Les ailes 12 participent au guidage des mouvements de pivotement par rapport au bâti 3a,3b, comme cela sera expliqué ultérieurement.

Le corps de cale 8 comprend également un rabat avant 13 et un rabat arrière 14 sous lequel se loge l'axe 10.

Sur les Figures 2 et 4, on peut voir que le corps de cale 8 comprend également deux pièces de soutien 15, parallèles et positionnées chacune à proximité d'une aile 12 et sur lesquelles est fixée la platine 11. Les pièces de soutien 15 sont encastrées à leur extrémité avant dans le rabat avant 13. Un trou traversant 16 est ménagé à leur extrémité arrière pour le passage de l'axe 10.

Bien entendu, on pourra utiliser un corps de cale identique à celui du brevet FR 2779137 B1, à savoir d'un seul tenant et sans pièces de soutien 15.

Deux barres supérieure 17 et inférieure 18, parallèles, s'étendent entre les ailes 12, avec une extrémité montée fixe dans un trou 19 de chaque aile 12.

Les moyens de manoeuvre et de verrouillage 9 comprennent un volet de verrouillage 20 qui comprend, comme on peut mieux le voir sur la Figure 3, un bord inférieur d'appui 21 ainsi qu'un logement transversal 22, prévu pour recevoir en parties haute et basse respectivement, les barres supérieure 17 et inférieure 18, comme on peut le voir sur la Figure 2. Une fenêtre 23, prévue au centre du volet 20, permet de laisser passer la tête 24 d'une tige 25 d'un vérin à double effet 26.

Comme on peut le voir sur le Figure 2, le vérin 26 a sa direction de poussée sensiblement parallèle à la platine 11 lorsque le corps de cale 8 est en position déployée. Cette direction de poussée passe au-dessous de la barre supérieure 17 pour obtenir les effets de basculement du volet de verrouillage 20. Le corps du vérin 26 est relié au bâti 3a,3b par un axe 27 de pivotement s'étendant entre et perpendiculaire aux plaques latérales 4a,4b ; 4c,4d.

Si l'on se réfère à la Figure 4, on peut voir que les ailes 12 présente chacune une échancrure 28 pour recevoir l'extrémité d'un arbre 29 parallèle à l'axe 10 et faisant saillie sur l'extérieur des ailes 12. L'arbre 29 s'étend à travers un cylindre creux 30 externe, en butée contre une aile 12 par l'une de ses extrémités, un ressort 31 étant en compression entre l'autre extrémité du cylindre creux 30 et l'autre aile 12, de sorte que l'arbre 29 est fixé en position par rapport aux ailes 12. Les extrémités de l'arbre 29 en saillie sur l'extérieur des ailes 12 sont reçues dans les rainures 5, de sorte qu'en utilisation, la coopération extrémité de l'arbre 29/rainure 5 participe au guidage du pivotement des cales 2a,2b.

Si l'on se réfère maintenant à la Figure 5, on peut voir que, selon une variante du mode de réalisation décrit ci-dessus, les deux cales 2a,2b comprennent un seul bâti 3 comprenant deux plaques latérales 4a,4d et une plaque centrale 4e, parallèles entre elles. Ici, les deux plaques latérales 4b,4c, contigües, sont remplacées par la seule plaque centrale 4e, laquelle est donc une fois et demie plus longue que les plaques latérales 4a,4d et présente deux rainures 5 pour recevoir chacune une extrémité d'un arbre 29. Comme pour le mode de réalisation décrit ci-dessus, les plaques latérales 4a,4d sont décalées dans la direction longitudinale, à mi-longueur. Les entretoises 7 relient chaque plaque latérale 4a,4d à la plaque centrale 4e.

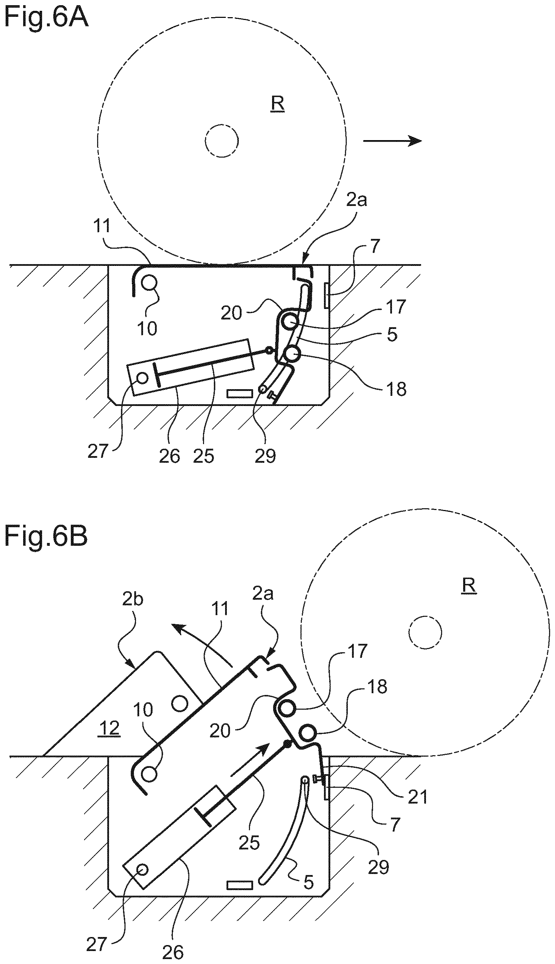

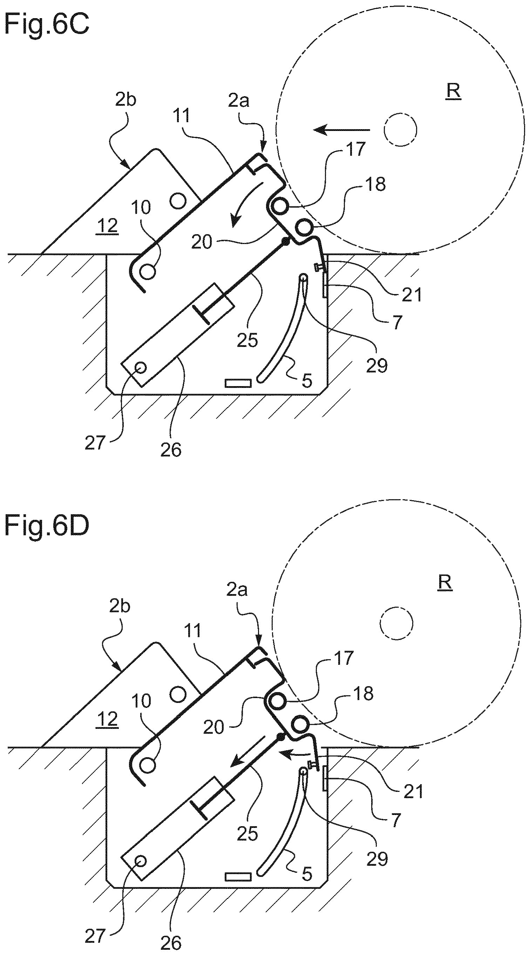

Le fonctionnement du dispositif d'immobilisation 1 va maintenant être décrit avec référence aux Figures 6A à 6D, de manière succincte dans la mesure où il correspond à celui exposé dans le brevet français FR 2779137.

Sur la Figure 6A, le véhicule, dont on a symbolisé uniquement une roue R, recule dans le sens de la flèche. Le piston du vérin 26 est rétracté de sorte que la cale 2a, 2b est escamotée dans le sol.

Dès que le véhicule est en place, le vérin 26 est mis sous pression, ce qui provoque, par l'intermédiaire du volet 20 mis en appui contre les barres 17 et 18, et du guidage assuré par les ailes 12 et la coopération arbre 29/rainure 5, le pivotement et le déploiement des corps de cale 8 qui ne sont pas sous une roue, comme on peut le voir sur la Figure 6B.

Sur la Figure 6C, la roue R vient appuyer contre la cale, par exemple par suite d'un léger déplacement involontaire. Cet appui fait basculer le volet 20 par rapport à la barre inférieure 18, ce qui amène la mise en appui du bord inférieur 21 sur l'entretoise 7 qui sert alors de butée. Le corps de cale 8 est alors immobilisé en pivotement.

Ce maintien en position déployée assure le blocage de la roue R si celle-ci cherche à avancer.

Lorsque le véhicule doit être libéré, il suffit de rétracter le vérin 26, ce qui amène le bord inférieur 21 du volet 20 à s'échapper de l'entretoise 7, le corps de cale 8 pivotant vers la position escamotée avec guidage par les ailes 12 et la coopération arbre 29/rainure 5.

On constate donc que, dans le cas illustré, la distance à parcourir par la roue R avant d'être arrêtée par une cale 2a,2b est réduite par rapport au cas où une seule série de cales est prévue. En effet, dans ce dernier cas, la roue R aurait pu être arrêtée uniquement par la cale 2b sur l'exemple illustrée sur la Figure 6C.

Dans le mode de réalisation particulier représenté, où le dispositif d'immobilisation 1 comprend deux séries de cales 2a,2b avec décalage à mi-longueur l'une de l'autre, le pas entre deux cales 2a,2b consécutives dans la direction longitudinale est réduit de moitié et la distance maximale théorique entre une cale 2a,2b et la roue R est donc également réduite de moitié.

Le dispositif d'immobilisation 1 permet donc d'augmenter la fiabilité d'immobilisation du véhicule.

Il est bien entendu que les modes de réalisation ci-dessus de la présente invention ont été donnés à titre indicatif et non limitatif et que des modifications pourront y être apportées sans que l'on s'écarte pour autant du cadre de la présente invention qui est définie par les revendications.

## Revendications

1. Dispositif d'immobilisation (1) d'un véhicule dans un emplacement de chargement/déchargement, destiné à être installé dans le sol et comprenant une série de cales (2a) d'immobilisation escamotables alignées le long d'un axe dit longitudinal et chacune mobile entre une position escamotée dans le sol, permettant le passage des roues d'un véhicule, et une position déployée, dans laquelle la cale (2a) fait saillie par rapport au sol pour former un arrêt contre lequel vient buter une roue (R) d'un véhicule, **caractérisé par le fait qu'**il comprend au moins une autre série de cales (2b) d'immobilisation escamotables alignées le long d'un axe parallèle audit axe longitudinal, chacune desdites séries de cales (2a, 2b) étant disposée adjacente le long d'une autre série de cales (2a, 2b) pour que les cales (2a, 2b) forment, dans la position déployée, un arrêt pour les roues (R) d'un même côté du véhicule, chaque cale (2a, 2b) d'une série étant décalée des cales (2a, 2b) de la ou des autres séries, dans la direction dudit axe longitudinal.

2. Dispositif d'immobilisation (1) selon la revendication 1, **caractérisé par le fait que** la largeur des cales est comprise entre 10 cm et 40 cm, et est, de préférence, de 18 cm.

3. Dispositif d'immobilisation (1) selon l'une des revendications 1 et 2, **caractérisé par le fait que** l'espacement entre deux cales (2a, 2b) immédiatement consécutives d'une même série de cales (2a, 2b) est constant sur toute ladite série et constitue le pas de ladite série, que toutes les séries de cales (2a, 2b) ont un même pas et que, pour une quelconque cale (2a, 2b) d'une série, le décalage entre, d'une part, cette cale (2a, 2b) et, d'autre part, la cale (2a, 2b) la plus proche, dans la ou chacune des séries immédiatement à côté de ladite série précitée, est égal audit pas divisé par le nombre de séries de cales (2a, 2b).

4. Dispositif d'immobilisation (1) selon la revendication 3, **caractérisé par le fait qu'**il comprend deux séries de cales (2a, 2b), ledit décalage étant alors égal à la moitié du pas des séries.

5. Dispositif d'immobilisation (1) selon la revendication 4, **caractérisé par le fait que** le pas est compris entre 5 cm et 40 cm, et est, de préférence, de 20 cm.

6. Dispositif d'immobilisation (1) selon l'une des revendications 1 à 5, **caractérisé par le fait que** chaque cale (2a, 2b) est une cale autonome comprenant un corps de cale (8) et un bâti (3a, 3b) dans lequel le corps de cale (8) est monté mobile, le bâti (3a, 3b) comprenant, de préférence, deux plaques latérales (4a,4b ; 4c,4d) verticales parallèles entre elles et reliées par des entretoises (7), le corps de cale (8) étant monté entre lesdites deux plaques latérales (4a,4b ; 4c,4d).

7. Dispositif d'immobilisation (1) selon l'une des revendications 1 à 5, **caractérisé par le fait que** chaque cale (2a, 2b) d'une série de cales (2a, 2b) est montée mobile dans un bâti (3) dans lequel est également montée la cale (2a, 2b), de la ou de chaque autre série de cales (2a, 2b), la plus proche de ladite cale (2a, 2b) précitée, lesdites cales (2a, 2b) partageant ainsi le même bâti (3).

8. Dispositif d'immobilisation (1) selon la revendication 7, prise en dépendance de la revendication 4, **caractérisé par le fait que** chaque bâti (3) comprend deux plaques latérales (4a, 4d) de même longueur, égale au pas des deux séries de cales (2a, 2b), et une plaque centrale (4e) de longueur égale à 1,5 fois la longueur des plaques latérales (4a, 4d), les plaques latérales (4a, 4d) et centrale (4e) étant verticales et parallèles, chaque plaque latérale (4a, 4d) étant reliée à la plaque centrale (4e) par au moins une entretoise (7), une première plaque latérale (4a) étant en regard d'une face de la plaque centrale (4e) et disposée de telle sorte qu'un bord vertical de ladite plaque latérale (4a) et un bord vertical de ladite plaque centrale (4a) appartiennent à un même plan théorique vertical perpendiculaire audit axe longitudinal, et la seconde plaque latérale (4d) étant en regard de la face opposée de la plaque centrale (4e) et disposée de telle sorte qu'un bord vertical de ladite seconde plaque latérale (4d) et l'autre bord vertical de ladite plaque centrale (4a) appartiennent également à un même plan théorique vertical perpendiculaire audit axe longitudinal.

9. Dispositif d'immobilisation (1) selon l'une des revendications 6 à 8, **caractérisé par le fait que** le corps de cale (8) est articulé de façon pivotante par rapport au bâti (3) et que la cale (2a, 2b) comprend des moyens de manoeuvre et de verrouillage du corps de cale (8) entre la position escamotée et la position déployée, ces moyens de manoeuvre et de verrouillage comprenant un volet (20) de verrouillage basculant entre deux positions l'une de verrouillage en butée sur une partie (7) du bâti (3), et l'autre escamotée, qui correspondent respectivement aux positions déployée et escamotée de la cale (2a, 2b), ainsi qu'un vérin double effet (26), interposé entre ce volet (20) et le bâti (3) .

10. Système d'immobilisation d'un véhicule dans un emplacement de chargement/déchargement, **caractérisé par le fait qu'**il comprend deux dispositifs d'immobilisation (1) tels que définis à l'une des revendications 1 à 9, installés dans l'emplacement de chargement/déchargement, chacun le long d'un côté dudit emplacement, le système d'immobilisation comprenant en outre au moins une fosse pour chaque dispositif d'immobilisation (1), de préférence une seule fosse par dispositif d'immobilisation (1).

## Patentansprüche

1. Immobilisierungsvorrichtung (1) für ein Fahrzeugs an einem Be-/Entladeplatz, dazu bestimmt, im Boden installiert zu werden, mit einer Reihe von versenkbaren Immobilisierungs-keilen (2a), die entlang einer so genannten Längsachse ausgerichtet sind und jeweils beweglich zwischen einer eingezogenen Position im Boden, wodurch das Durchfahren der Räder eines Fahrzeugs möglich wird, und einer ausgefahrenen Position, in der der Keil (2a) aus dem Boden ragt, zur Bildung einer Sperre, gegen die ein Rad (R) eines Fahrzeugs anschlägt, **gekennzeichnet dadurch, dass** sie mindestens eine weitere Reihe von versenkbaren Immobilisierungskeilen (2b) umfasst, die entlang einer zur Längsachse parallelen Achse ausgerichtet sind, wobei jede der besagten Reihen von Keilen (2a, 2b) angrenzend entlang einer anderen Reihe von Keilen (2a, 2b) angeordnet ist, damit die Keile (2a, 2b) in der ausgefahrenen Position eine Sperre für die Räder (R) an derselben Seite des Fahrzeugs bilden, wobei jeder Keil (2a, 2b) einer Reihe versetzt zu den Keilen (2a, 2b) der anderen Reihe(n) ist, in Richtung der genannten Längsachse.

2. Immobilisierungsvorrichtung (1) nach Anspruch 1, **gekennzeichnet dadurch, dass** die Breite der Keile zwischen 10 cm und 40 cm beträgt, vorzugsweise 18 cm.

3. Immobilisierungsvorrichtung (1) nach einem der Ansprüche 1 und 2, **gekennzeichnet dadurch, dass** der Abstand zwischen zwei unmittelbar aufeinanderfolgenden Keilen (2a, 2b) derselben Reihe von Keilen (2a, 2b) über die gesamte Reihe konstant ist und die Teilung besagter Reihe bildet, dass alle Reihen von Keilen (2a, 2b) dieselbe Teilung haben und dass für einen beliebigen Keil (2a, 2b) einer Reihe, der Versatz zwischen, einerseits, diesem Keil (2a; 2b) und, andererseits, dem nächstgelegenen Keil (2a, 2b), in der oder jeder Reihen direkt neben besagter vorgenannter Reihe, gleich der genannte Teilung geteilt durch die Zahl der Reihen von Keilen (2a, 2b) ist.

4. Immobilisierungsvorrichtung (1) nach Anspruch 3, **gekennzeichnet dadurch, dass** sie zwei Reihen von Keilen (2a, 2b) umfasst, so dass der Versatz gleich der Hälfte der Teilung der Reihen ist.

5. Immobilisierungsvorrichtung (1) nach Anspruch 4, **gekennzeichnet dadurch, dass** die Teilung zwischen 5 cm und 40 cm beträgt, vorzugsweise 20 cm.

6. Immobilisierungsvorrichtung (1) nach einem der Ansprüche 1 bis 5, **gekennzeichnet dadurch, dass** jede Keil (2a, 2b) ein selbständiger Keil ist, der einen Keilkörper (8) umfasst und ein Gestell (3a, 3b), in das der Keilkörper (8) beweglich montiert ist, das Gestell (3a; 3b) umfasst vorzugsweise zwei seitliche senkrechte Platten (4a,4b ; 4c,4d), die parallel zueinander und durch Abstandshalter (7) verbunden sind, der Keilkörper (8) ist zwischen die beiden seitlichen Platten (4a,4b ; 4c,4d) montiert.

7. Immobilisierungsvorrichtung (1) nach einem der Ansprüche 1 bis 5, **gekennzeichnet dadurch, dass** jeder Keil (2a, 2b) einer Reihe von Keilen (2a, 2b) beweglich in einem Gestell (3) montiert ist, in dem ebenfalls der Keil (2a, 2b) der oder jeder weiteren Reihe von Keilen (2a, 2b) montiert ist, dem vorgenannten Keil (2a, 2b) nächstgelegen, so dass die Keile (2a, 2b) dasselbe Gestell (3) teilen.

8. Immobilisierungsvorrichtung (1) nach Anspruch 7, abhängig von Anspruch 4, gekennzeichnet , dass jedes Gestell (3) zwei seitliche Platten (4a, 4d) derselben Länge umfasst, die gleich der Teilung der beiden Reihen von Keilen (2a, 2b) ist, und eine mittlere Platte (4e), deren Länge 1,5 Mal die Länge der seitlichen Platten (4a, 4d) ist, wobei die seitlichen Platten (4a, 4d) und die mittlere Platte (4e) senkrecht und parallel sind, wobei jede seitliche Platte (4a, 4d) mit der mittleren Platte (4e) durch mindestens einen Abstandshalter (7) verbunden ist und eine erste seitliche Platte (4a) gegenüber einer Seite der mittlere Platte (4e) liegt und derart angeordnet ist, dass ein senkrechter Rand der seitlichen Platte (4a) und ein senkrechter Rand der mittleren Platte (4a) derselben senkrechten theoretischen Ebene angehören, die senkrecht zur genannten Längsachse ist, und die zweite seitliche Platte (4d) liegt gegenüber der entgegengesetzten Seite der mittlere Platte (4e) und ist derart angeordnet, dass ein senkrechter Rand von besagter seitlicher zweiter Platte (4d) und der andere senkrechte Rand der mittleren Platte (4a) ebenfalls derselben senkrechten theoretischen Ebene angehören, die senkrecht zur genannten Längsachse ist.

9. Immobilisierungsvorrichtung (1) nach einem der Ansprüche 6 bis 8, **gekennzeichnet dadurch, dass** der Keilkörper (8) drehbar am Gestell (3) angelenkt ist und dass der Keil (2a, 2b) Betätigungs- und Verriegelungsmittel des Keilkörpers (8) zwischen der eingezogenen Position und der ausgefahrenen Position umfasst, wobei diese Betätigungs- und Verriegelungsmittel eine Verriegelungsklappe (20) umfassen, die zwischen zwei Positionen kippbar ist, einer zur Verriegelung in Endanschlag auf einem Teil (7) des Gestells (3) und einer eingezogenen, die der ausgefahrenen bzw. eingezogenen Position des Keils (2a, 2b) entsprechen, sowie einen doppelt wirkenden Zylinder (26) zwischen dieser Klappe (20) und dem Gestell (3).

10. Immobilisierungssystem eines Fahrzeugs an einem Be-/Entladeplatz, **gekennzeichnet dadurch, dass** es zwei Immobilisierungsvorrichtungen (1) umfasst, wie sie in einem der Patentansprüche 1 bis 9 definiert sind, die an dem Be-/Entladestandort installiert sind, jede entlang einer Seite des genannten Platzes, wobei das Immobilisierungssystem außerdem mindestens eine Grube pro Immobilisierungsvorrichtung (1) umfasst, vorzugsweise eine einzige Grube pro Immobilisierungsvorrichtung (1).

## Claims

1. A device (1) for immobilising a vehicle at a loading/unloading location, intended to be installed in the ground and comprising a series of retractable immobilisation wedges (2a) aligned along a so-called longitudinal axis and each movable between a position retracted in the ground, allowing the wheels of a vehicle to pass, and an extended position, in which the wedge (2a) protrudes with respect to the ground so as to form a stop against which a wheel (R) of a vehicle abuts, **characterised by** the fact that it comprises at least one other series of retractable immobilisation wedges (2b) aligned along an axis parallel to said longitudinal axis, each of said series of wedges (2a, 2b) being arranged adjacent along another series of wedges (2a, 2b) such that the wedges (2a, 2b) form, in the extended position, a stop for the wheels (R) on a same side of the vehicle, each wedge (2a, 2b) of a series being offset with respect to the wedges (2a, 2b) of the one or more other series, in the direction of said longitudinal axis.

2. The immobilisation device (1) according to claim 1, **characterised by** the fact that the width of the wedges is between 10 cm and 40 cm, and is preferably 18 cm.

3. The immobilisation device (1) according to one of claims 1 and 2, **characterised by** the fact that the spacing between two immediately consecutive wedges (2a, 2b) of a same series of wedges (2a, 2b) is constant on the entire said series and constitutes the pitch of said series, by the fact that all series of wedges (2a, 2b) have the same pitch and by the fact that, for any wedge (2a, 2b) of a series, the offset between, on one hand, this wedge (2a, 2b) and, on the other hand, the closest wedge (2a, 2b), in the or each series immediately adjacent to said series mentioned above, is equal to said pitch divided by the number of series of wedges (2a, 2b).

4. The immobilisation device (1) according to claim 3, **characterised by** the fact that it comprises two series of wedges (2a, 2b), said offset thus being equal to half of the pitch of the series.

5. The immobilisation device (1) according to claim 4, **characterised by** the fact that the pitch is between 5 cm and 40 cm, and is preferably 20 cm.

6. The immobilisation device (1) according to one of claims 1-5, **characterised by** the fact that each wedge (2a, 2b) is an autonomous wedge comprising a wedge body (8) and a frame (3a, 3b) in which the wedge body (8) is movably mounted, the frame (3a, 3b) preferably comprising two side plates (4a, 4b; 4c, 4d) vertical and parallel to each other and connected by struts (7), the wedge body (8) being mounted between said two side plates (4a, 4b; 4c, 4d).

7. The immobilisation device (1) according to one of claims 1-5, **characterised by** the fact that each wedge (2a, 2b) of a series of wedges (2a, 2b) is movably mounted in a frame (3) in which the wedge (2a, 2b), of the or each series of wedges (2a, 2b), which is closest to said wedge (2a, 2b) mentioned above, is also mounted, said wedges (2a, 2b) thus sharing the same frame (3).

8. The immobilisation device (1) according to claim 7 when dependent on claim 4, **characterised by** the fact that each frame (3) comprises two side plates (4a, 4d) having the same length, equal to the pitch of the two series of wedges (2a, 2b), and a middle plate (4e) having a length equal to 1.5 times the length of the side plates (4a, 4d), the side (4a, 4d) and middle (4e) plates being vertical and parallel, each side plate (4a, 4d) being connected to the middle plate (4e) by at least one strut (7), a first side plate (4a) facing a face of the middle plate (4e) and being arranged such that a vertical edge of said side plate (4a) and a vertical edge of said middle plate (4e) belong to a same vertical theorical plane perpendicular to said longitudinal axis, and the second side plate (4d) facing the opposite face of the middle plate (4e) and being arranged such that a vertical edge of said second side plate (4d) and the other vertical edge of said middle plate (4e) also belong to a same vertical theorical plane perpendicular to said longitudinal axis.

9. The immobilisation device (1) according to one of claims 6-8, **characterised by** the fact that the wedge body (8) is pivotally hinged with respect to the frame (3), and by the fact that the wedge (2a, 2b) comprises means for handling and locking the wedge body (8) between the retracted position and the extended position, these handling and locking means comprising a locking flap (20) swinging between two positions, one being a position of locking in abutment on a part (7) of the frame (3), and the other being a retracted position, which respectively correspond to the extended and retracted positions of the wedge (2a, 2b), as well as a double effect cylinder (26) interposed between this flap (20) and the frame (3).

10. A system for immobilising a vehicle at a loading/unloading location, **characterised by** the fact that it comprises two immobilisation devices (1) as defined in one of claims 1-9, installed at the loading/unloading location, each one along one side of said location, the immobilisation system further comprising at least one pit for each immobilisation device (1), preferably only one pit per immobilisation device (1).
